# EUROPEAN PATENT APPLICATION

(11) **EP 1 442 801 A2**
(43) Date of publication of application: **04.08.2004**
(21) Application number: 04250545.3
(22) Date of filing: 02.02.2004
(51) Int. Cl.: B07C 3/18

(54) **Mail item delivery system and method**

(30) Priority: 31.01.2003 GB 0302276
(71) Applicant: NEOPOST INDUSTRIE SA, F-92220 Bagneux (FR)
(72) Inventor: Boden, Keith McMurray, Reigate, Surrey RH2 OLA (GB); Herbert, Raymond John, Leigh-on-Sea, Essex SS9 3PP (GB)
(74) Representative: Boden, Keith McMurray

(57) **Abstract**

A mail item delivery system and method, the system comprising: at least one mail item printing unit for printing postage indicia for mail items, wherein the postage indicia for at least ones of the mail items contain delivery information utilized in delivering the at least ones of the mail items; and at least one mail item processing unit through which at least ones of the mail items are processed in routing the mail items to respective destination delivery locations, wherein each mail item processing unit includes a mail item handler for reading the delivery information contained in the postage indicia of the at least ones of the mail items as received thereat.

## Description

The present invention relates to a mail item delivery system and method.

Conventionally, in the handling of mail items, be this by a state postal operator, such as The Royal Mail in the United Kingdom, or a licensed private postal operator, a charge is made to deliver mail items to a defined postal address. This charge is typically represented by a stamp purchased at a postal outlet or a franking impression as applied by a franking machine.

It is an aim of the present invention to provide a more flexible mail item delivery system which provides for mail item delivery reporting and allows for the scheduling of the delivery or collection of mail items.

In one aspect the present invention provides a mail item delivery system, comprising: at least one mail item printing unit for printing postage indicia for mail items, wherein the postage indicia for at least ones of the mail items contain delivery information utilized in delivering the at least ones of the mail items; and at least one mail item processing unit through which at least ones of the mail items are processed in routing the mail items to respective destination delivery locations, wherein each mail item processing unit includes a mail item handler for reading the delivery information of the postage indicia of the at least ones of the mail items as received thereat.

In one embodiment the delivery information includes a report event specifier which defines at least one report event at which one or both of a sender and a recipient of the respective item is to receive a report.

In one embodiment the report event specifier defines current status reporting, whereby one or both of a current location of the respective item and an expected date of delivery is reported at intervals.

In one embodiment the report event specifier defines confirmation of delivery reporting, whereby delivery of the respective item is confirmed.

Preferably, the delivery information includes a contact specifier which defines contact details for one or both of the sender and the recipient.

Preferably, the mail item handler includes a reporter for reporting the at least one report event to one or both of the sender and the recipient.

Preferably, the mail item handler includes a sorter for sorting the at least ones of the mail items in accordance with the delivery information contained in the respective postage indicia.

In one embodiment the delivery information includes an alternate delivery location specifier which defines an alternate location to which the respective item is to be delivered.

In one embodiment the delivery information includes a delivery time specifier which defines a delivery time at which the respective item is to be delivered.

Preferably, the delivery time comprises a specific date or dates, and preferably a time window in the specified date or dates.

Preferably, the at least one mail item processing unit includes at least one portable device by which postal operatives obtain confirmation of delivery of the at least ones of the items, and the at least one portable device is in operable communication with the respective at least one mail item processing unit.

Preferably, the system further comprises: at least one mail item holding unit to which mail items are delivered for collection in accordance with the delivery information contained in the respective postage indicia.

In one embodiment the at least one mail item holding unit comprises an outlet, preferably a shop, such as a supermarket.

Preferably, the at least one mail item holding unit includes a reporter for reporting the at least one report event to one or both of the sender and the recipient.

Preferably, the mail items comprise letters or parcels.

In another aspect the present invention provides a method of delivering mail items, comprising the steps of: printing postage indicia for mail items, wherein the postage indicia for at least ones of the mail items contain delivery information to be utilized in delivering the at least ones of the mail items; processing the mail items through at least one mail item processing unit in routing the mail items to respective destination delivery locations; and reading the delivery information contained in the postage indicia of the at least ones of the mail items at each mail item processing unit.

In one embodiment the delivery information includes a report event specifier which defines at least one report event at which one or both of a sender and a recipient of the respective item is to receive a report.

In one embodiment the report event specifier defines current status reporting, whereby one or both of a current location of the respective item and an expected date of delivery is reported at intervals.

In one embodiment the report event specifier defines confirmation of delivery reporting, whereby delivery of the respective item is confirmed.

Preferably, the delivery information includes a contact specifier which defines contact details for one or both of the sender and the recipient.

Preferably, the method further comprises the step of: reporting the at least one report event to one or both of the sender and the recipient.

Preferably, the method further comprises the step of: sorting the at least ones of the mail items in accordance with the delivery information contained in the respective postage indicia.

In one embodiment the delivery information includes an alternate delivery location specifier which defines an alternate location to which the respective item is to be delivered.

In one embodiment the delivery information includes a delivery time specifier which defines a delivery time at which the respective item is to be delivered.

Preferably, the delivery time comprises a specific date or dates, and preferably a time window in the specified date or dates.

Preferably, the method further comprises the steps of: obtaining confirmation of delivery of at least ones of the items; and communicating confirmation of delivery with the respective at least one mail item processing unit.

Preferably, the method further comprises the step of: delivering mail items to at least one mail item holding unit for collection in accordance with the delivery information contained in the respective postage indicia.

In one embodiment the at least one mail item holding unit comprises an outlet, preferably a shop, such as a supermarket.

Preferably, the mail items comprise letters or parcels.

A preferred embodiment of the present invention will now be described hereinbelow by way of example only with reference to the accompanying drawing, in which:

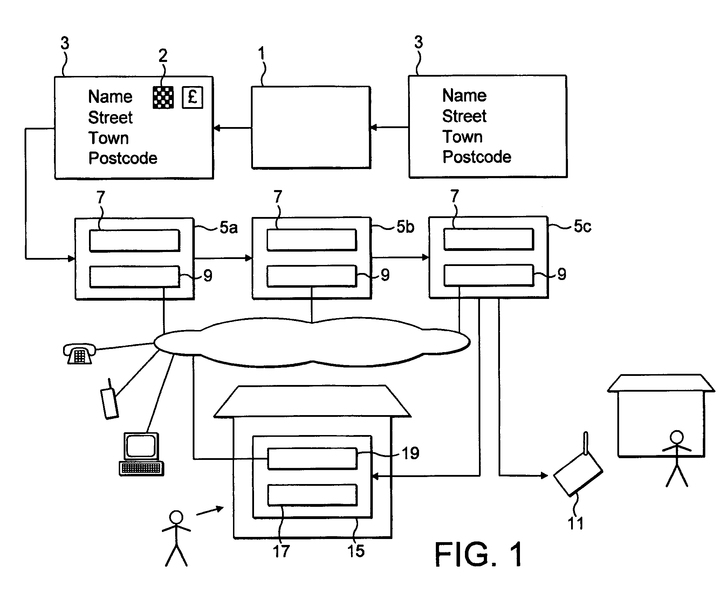

Figure 1 schematically illustrates a mail item delivery system in accordance with a preferred embodiment of the present invention.

The delivery system comprises at least one mail item printing unit 1, in a preferred embodiment a plurality of mail item printing units 1 for printing postage indicia 2 containing delivery information for mail items 3, which delivery information is utilized by the delivery system in the delivery of the mail items 3.

In one embodiment, such as for letters, the at least one mail item printing unit 1 can print directly on the mail items 3. In another embodiment, such as for parcels, the at least one mail item printing unit 1 can print on labels which are subsequently applied to the mail items 3.

In this embodiment the at least one mail item printing unit 1 comprises a franking machine for printing franking impressions for application to mail items 3. Where the franking machine is a machine for printing digital indicia as specified by digital indicia standards, which indicia utilize two-dimensional symbols to convey postal information, the delivery information can be contained in the two-dimensional symbol.

The delivery information includes a report event specifier which specifies any report events at which one or both of the sender and the recipient of a mail item 3 is to receive a report. In this embodiment the report event specifier can be set such as to provide for: (I) no event reporting, (II) current status reporting, whereby one or both of the current location of the mail item 3 and the expected date of delivery is reported, and (III) reporting of confirmation of delivery of the mail item 3, with date and time.

In a preferred embodiment the report event specifier can utilize a single code, as exemplified in the table hereinbelow.

| **CODE** | **REPORT EVENT** |
|---|---|
| 0 | I (No Report) |
| 1 | II (Sender) |
| 2 | II (Recipient) |
| 3 | II (Sender & Recipient) |
| 4 | III (Sender) |
| 5 | III (Recipient) |
| 6 | III (Sender & Recipient) |
| 7 | II (Sender) & III (Sender) |
| 8 | II (Sender) & III (Recipient) |
| 9 | II (Sender) & III (Sender & Recipient) |
| 10 | II (Recipient) & III (Sender) |
| 11 | II (Recipient) & III (Recipient) |
| 12 | II (Recipient) & III (Sender & Recipient) |
| 13 | II (Sender & Recipient) & III (Sender) |
| 14 | II (Sender & Recipient) & III (Recipient) |
| 15 | II (Sender & Recipient) & III (Sender & Recipient) |

The delivery information includes a contact specifier which specifies the contact format and the contact details for one or both of the recipient and the sender. In this embodiment the contact format can be any of: (i) a voice message, (ii) a text (SMS) message, or (iii) an e-mail message, and the contact details are telephone numbers, either fixed or mobile, or an e-mail address.

The delivery information includes an alternate delivery location specifier which defines an alternate location to which the mail item 3 is to be delivered or a location from which a mail item 3 is to be collected, for example, where the recipient will not, or cannot be certain, of being present personally to receive the mail item 3 and the mail item 3 requires a signature for delivery or is too bulky for delivery.

The delivery information includes a delivery time specifier which enables a delivery time to be specified, such that the mail item 3 will be delivered at the delivery location in a specified time window. By enabling the recipient to specify a time window for the delivery, the recipient can be certain of being at the delivery location on delivery, and again the scenario of repeated attempted deliveries to unattended locations can be avoided.

The delivery system further comprises at least one mail item processing unit 5, in a preferred embodiment a plurality of mail item processing units 5 which receive mail items 3 and process the same in routing the mail items 3 to the respective destination locations. In this embodiment, by way of example, the delivery system comprises first, second and third mail item processing units 5a, 5b, 5c, such that, for one mail item 3, the first mail item processing unit 5a is a unit local to the sender, the third mail item processing unit 5c is a unit local to the destination location of the mail item 3, and the second mail item processing unit 5b is a unit intermediate the first and third mail item processing units 5a, 5c through which the mail item 3 is routed by the first mail item processing unit 5a.

The mail item processing units 5a, 5b, 5c each include a mail item handler 7 for reading the delivery information from respective mail items 3 and sorting the mail items 3 in accordance with the read delivery information, either for delivery therefrom or for transfer to another of the mail item processing units 5a, 5b, 5c.

The mail item processing units 5a, 5b, 5c each further include a reporter 9 for reporting any event as specified by the report event specifier in the delivery information in accordance with the contact specifier defined by the delivery information.

Where the event report (II) is specified, the reporter 9 of each mail item processing unit 5a, 5b, 5c reports one or both of the location of the mail item 3 and the expected date of delivery to one or both of the recipient or the sender as the mail item 3 is successively received thereby.

Where the alternate location specifier provides for delivery to an alternate location, the mail item processing unit 5a, 5b, 5c identifies the alternate address and sorts the mail item 3 for delivery in accordance with the alternate address location.

Where the alternate delivery time specifier provides for delivery in a predetermined time window, the mail item processing unit 5a, 5b, 5c identifies the delivery time window and sorts the mail item 3 for delivery in accordance with the delivery time window.

In this embodiment the mail item processing units 5a, 5b, 5c each further include at least one portable device 11, in a preferred embodiment a plurality of portable devices 11 by which postal operatives receive confirmation of delivery of mail items 3 to delivery locations. In this embodiment the at least one portable device 11 is in mobile communication with the respective mail item processing unit 5a, 5b, 5c, such as to communicate confirmation of delivery of a mail item 3 directly to the respective mail item processing unit 5a, 5b, 5c. In an alternative embodiment, the at least one portable device 11 can instead be dockable at a docking station, such as to provide for the downloading of the confirmation of delivery of a mail item 3.

Where event report (III) is specified, the reporter 9 of the mail item processing unit 5a, 5b, 5c from which the mail item 3 is delivered reports confirmation of delivery of the mail item 3 to one or both of the recipient and the sender.

The delivery system further comprises at least one mail item holding unit 15, in a preferred embodiment a plurality of mail item holding units 15 to which mail items 3 are delivered for collection by or on behalf of the recipient in accordance with the alternate location specifier.

The mail item holding units 15 each include a mail item reader 17 for reading the delivery information from respective mail items 3, and a reporter 19 for reporting to the recipient that the mail item 3 is ready for collection in accordance with the contact specifier defined by the delivery information.

It is envisaged that numerous mail item pick-up points other than existing mail depots will be available, typically in shops, such as supermarkets, which would provide a location much more local than any of the existing mail depots and which offer extended hours of opening. For example, a recipient could require that delivery be made to a pick-up point close to the home or workplace, in the knowledge that the mail item 3 can be collected at a convenient time. By providing for an alternate delivery location, in particular a pick-up point, the scenario of repeated deliveries to unattended locations can be avoided.

Finally, it will be understood that the present invention has been described in its preferred embodiment and can be modified in many different ways without departing from the scope of the invention as defined by the appended claims.

In one embodiment all or part of the delivery information could be cryptographically encoded, for example, by signature or encryption, to provide for security of the information.

## Claims

1. A mail item delivery system, comprising:
at least one mail item printing unit for printing postage indicia for mail items, wherein the postage indicia for at least ones of the mail items contain delivery information utilized in delivering the at least ones of the mail items; and
at least one mail item processing unit through which at least ones of the mail items are processed in routing the mail items to respective destination delivery locations, wherein each mail item processing unit includes a mail item handler for reading the delivery information contained in the postage indicia of the at least ones of the mail items as received thereat.

2. The system of claim 1, wherein the delivery information includes a report event specifier which defines at least one report event at which one or both of a sender and a recipient of the respective item is to receive a report.

3. The system of claim 2, wherein the report event specifier defines current status reporting, whereby one or both of a current location of the respective item and an expected date of delivery is reported at intervals.

4. The system of claim 2 or 3, wherein the report event specifier defines confirmation of delivery reporting, whereby delivery of the respective item is confirmed.

5. The system of any of claims 2 to 4, wherein the delivery information includes a contact specifier which defines contact details for one or both of the sender and the recipient.

6. The system of any of claims 2 to 5, wherein the at least one mail item processing unit includes a reporter for reporting the at least one report event to one or both of the sender and the recipient.

7. The system of any of claims 1 to 6, wherein the mail item handler includes a sorter for sorting the at least ones of the mail items in accordance with the delivery information contained in the respective postage indicia.

8. The system of claim 7, wherein the delivery information includes an alternate delivery location specifier which defines an alternate location to which the respective item is to be delivered.

9. The system of claim 7 or 8, wherein the delivery information includes a delivery time specifier which defines a delivery time at which the respective item is to be delivered.

10. The system of claim 9, wherein the delivery time comprises a specific date or dates, and preferably a time window in the specified date or dates.

11. The system of any of claims 1 to 10, wherein the at least one mail item processing unit includes at least one portable device by which postal operatives obtain confirmation of delivery of the at least ones of the items, and the at least one portable device is in operable communication with the respective at least one mail item processing unit.

12. The system of any of claims 1 to 11, further comprising:
at least one mail item holding unit to which mail items are delivered for collection.

13. The system of claim 12, wherein the at least one mail item holding unit comprises an outlet, preferably a shop, such as a supermarket.

14. The system of claim 12 or 13 when appendant upon claim 2, wherein the at least one mail item holding unit includes a reporter for reporting the at least one report event to one or both of the sender and the recipient.

15. The system of any of claims 1 to 14, wherein the mail items comprise letters or parcels.

16. A method of delivering mail items, comprising the steps of:
printing postage indicia for mail items, wherein the postage indicia for at least ones of the mail items contain delivery information to be utilized in delivering the at least ones of the mail items;
processing the mail items through at least one mail item processing unit in routing the mail items to respective destination delivery locations; and
reading the delivery information contained in the postage indicia of the at least ones of the mail items at each mail item processing unit.

17. The method of claim 16, wherein the delivery information includes a report event specifier which defines at least one report event at which one or both of a sender and a recipient of the respective item is to receive a report.

18. The method of claim 17, wherein the report event specifier defines current status reporting, whereby one or both of a current location of the respective item and an expected date of delivery is reported at intervals.

19. The method of claim 17 or 18, wherein the report event specifier defines confirmation of delivery reporting, whereby delivery of the respective item is confirmed.

20. The method of any of claims 17 to 19, wherein the delivery information includes a contact specifier which defines contact details for one or both of the sender and the recipient.

21. The method of any of claims 17 to 20, further comprising the step of: reporting the at least one report event to one or both of the sender and the recipient.

22. The method of any of claims 17 to 21, further comprising the step of: sorting the at least ones of the mail items in accordance with the delivery information contained in the respective postage indicia.

23. The method of claim 22, wherein the delivery information includes an alternate delivery location specifier which defines an alternate location to which the respective item is to be delivered.

24. The method of claim 22 or 23, wherein the delivery information includes a delivery time specifier which defines a delivery time at which the respective item is to be delivered.

25. The method of claim 24, wherein the delivery time comprises a specific date or dates, and preferably a time window in the specified date or dates.

26. The method of any of claims 16 to 25, further comprising the steps of:
obtaining confirmation of delivery of at least ones of the items; and
communicating confirmation of delivery with the respective at least one mail item processing unit.

27. The method of any of claims 16 to 26, further comprising the step of: delivering mail items to at least one mail item holding unit for collection.

28. The method of claim 27, wherein the at least one mail item holding unit comprises an outlet, preferably a shop, such as a supermarket.

29. The method of any of claims 16 to 28, wherein the mail items comprise letters or parcels.
